(19) Europäisches Patentamt
European Patent Office
Office européen des brevets

(11) **EP 0 773 468 B1**

(12) **FASCICULE DE BREVET EUROPEEN**

(45) Date de publication et mention
de la délivrance du brevet:
**22.10.2003 Bulletin 2003/43**

(51) Int Cl.⁷: **G02F 1/139**

(21) Numéro de dépôt: **96402369.1**

(22) Date de dépôt: **07.11.1996**

(54) **Dispositif d'affichage bistable à base de cristaux liquides nématiques autorisant des teintes de gris**

Bistabile nematische Flüssigkristallanzeige mit Graustufenfähigkeit

Bistable nematic liquid crystal display with grey scale capability

(84) Etats contractants désignés:
**AT BE CH DE DK ES FI FR GB GR IE IT LI LU MC NL PT SE**

(30) Priorité: **10.11.1995 FR 9513324**

(43) Date de publication de la demande:
**14.05.1997 Bulletin 1997/20**

(73) Titulaire: **Istituto Nazionale Per La Fisica Della Materia**
**16142 Genes (IT)**

(72) Inventeurs:
• **Barberi, Riccardo**
  **Arcavacada di Rende (CS) (IT)**
• **Durand, Georges**
  **91400 Orsay (FR)**
• **Bartolino, Roberto**
  **Aracavacata di Rende (CS) (IT)**
• **Giocondo, Michèle**
  **Cosenza (IT)**
• **Dozov, Ivan**
  **91190 Gif sur Yvette (FR)**
• **Li, Jun**
  **Arcavacada di Rende (CS) (IT)**

(74) Mandataire: **Texier, Christian**
**Cabinet Régimbeau**
**20, rue de Chazelles**
**75847 Paris cedex 17 (FR)**

(56) Documents cités:
**EP-A- 0 018 180          FR-A- 2 587 506**
**US-A- 5 040 876**

• **LIQUID CRYSTALS, AUG. 1991, UK, vol. 10, no. 2, ISSN 0267-8292, pages 289-293, XP000590840 BARBERI R ET AL: "Flow induced bistable anchoring switching in nematic liquid crystals"**
• **JOURNAL OF APPLIED PHYSICS, APRIL 1981, USA, vol. 52, no. 4, ISSN 0021-8979, pages 3032-3039, XP002009196 BERREMAN D W ET AL: "New bistable liquid-crystal twist cell"**
• **APPLIED PHYSICS LETTERS, 11 DEC. 1989, USA, vol. 55, no. 24, ISSN 0003-6951, pages 2506-2508, XP000095688 BARBERI R ET AL: "Electrically controlled surface bistability in nematic liquid crystals"**
• **APPLIED PHYSICS LETTERS, 2 MARCH 1992, USA, vol. 60, no. 9, ISSN 0003-6951, pages 1085-1086, XP000289969 BARBERI R ET AL: "Flexoelectrically controlled surface bistable switching in nematic liquid crystals"**

**Description**

La présente invention concerne le domaine des dispositifs d'affichage à base de cristaux liquides.

De nombreux dispositifs d'affichage à base de cristaux liquides ont déjà été proposés.

L'homme de l'art sait qu'en utilisant les propriétés d'ancrage bistable des cristaux liquides nématiques, on peut réaliser des dispositifs électro-optiques caractérisés par un temps d'addressage électrique très rapide, de l'ordre de quelques microsecondes, et un temps de réponse optique rapide, de l'ordre d'une milliseconde. Ces propriétés permettent de construire des dispositifs matriciels de grandes dimensions avec une haute résolution et des capacités de multiplexage infinies.

A ce jour deux dispositifs principaux d'affichage bistable basés sur des propriétés de surface ont été proposés. L'un repose sur un effet flexoélectrique, voir document WO-A-92/00546, l'autre repose sur un effet électrochiral, voir document WO-A-91/11747. Ces deux dispositifs utilisent une structure de type sandwich comprenant une couche de cristal liquide confinée entre deux plaques transparentes. Ils présentent deux textures en volume bien définies, possédant des propriétés optiques différentes. Ces deux textures sont défines par un choix approprié des directeurs de surface sur les deux plaques de confinement.

La présente invention a maintenant- pour but de perfectionner les dispositifs d'affichage à cristaux liquides bistables connus, pour permettre l'obtention de teintes de gris, ce que ne permettent pas les dispositifs d'affichage bistables connus.

Ce but est atteint selon la présente invention grâce à un dispositif d'affichage du type défini en revendication 1 annexée, laquelle est délimitée sous forme d'un préambule et d'une partie caractérisante par rapport au document Applied Physics Letters, Vol. 60 (1992) R. BARBERI.

Selon une autre caractéristique avantageuse de la présente invention, le dispositif comprend en outre des moyens d'alimentation électrique secondaires aptes à appliquer sur le matériau cristal liquide un champ électrique d'effacement permettant de rétablir un ancrage d'orientation uniforme sur la plaque présentant un ancrage quasi-bistable.

Comme on l'expliquera par la suite, le dispositif conforme à la présente invention permet d'obtenir un contraste variable, et par conséquent des teintes de gris variables, en modifiant l'intensité des impulsions de champ électrique issues des moyens d'alimentation électrique principaux.

Selon une autre caractéristique avantageuse de la présente invention, les plaques définissent au repos une structure hybride pour les molécules de cristal liquide : planaire sur la plaque d'ancrage quasi-bistable et homéotrope sur la plaque opposée.

Selon une autre caractéristique avantageuse de la présente invention, l'une des plaques, soit de préférence la plaque opposée à celle définissant l'ancrage quasi-bistable, est adaptée pour injecter des charges de polarité définie dans le matériau cristal liquide.

D'autres caractéristiques, buts et avantages de la présente invention apparaitront à la lecture de la description détaillée qui va suivre et en regard des dessins annexés donnés à titre d'exemples non limitatifs, et sur lesquels :

- la figure 1 représente schématiquement un dispositif d'affichage à cristaux liquides conforme à la présente invention,
- la figure 2 illustre schématiquement un déplacement de fluide obtenu dans le volume du cristal liquide lorsque le seuil de Felici est atteint,
- la figure 3 représente schématiquement une structure hybride, homéotrope/planaire, conforme à un dispositif d'affichage selon la présente invention, au repos,
- la figure 4 illustre la structure tordue du cristal liquide obtenue dans le cadre de la présente invention après application d'un champ électrique approprié, sous l'effet de défauts de surface,
- la figure 5 représente l'aspect d'un dispositif d'affichage conforme à la présente invention, au repos,
- les figures 6, 7 et 8 représentent l'aspect du même dispositif d'affichage conforme à la présente invention après application d'impulsions de champ électrique d'amplitude croissante,
- les figures 9a et 9b représentent l'intensité transmise en fonction du champ électrique appliqué, relevé sur deux dispositifs d'affichage conformes à la présente invention,
- les figures 10a, 10b et 10c représentent la lumière transmise en fonction du temps, relevée sur trois dispositifs d'affichage conformes à la présente invention, soumis à des impulsions de polarités alternées, respectivement pour inscrire des teintes de gris et effacer celles-ci,
- la figure 11 représente une courbe similaire obtenue avec des impulsions d'intensité insuffisante pour générer des défauts de surface stables,
- la figure 12 représente une courbe de l'intensité de la tension de commande requise, en fonction de sa durée,
- la figure 13 représente schématiquement l'allure d'un courant d'ions en fonction du temps, pour des impulsions de commande respectivemnt positives et négatives, et
- les figures 14a et 14b illustrent des courants d'ions obtenus sur deux dispositifs avec des impulsions de commande d'intensité variable.

Le dispositif d'affichage conforme à la présente invention comprend, comme les dispositifs antérieurs, une couche de matériau cristal liquide 10 prise en sandwich entre deux plaques de confinement transparentes, planes et parallèles 20, 30, typiquement en verre. Ces plaques 20, 30 sont pourvues de façon connue en soi, sur leur surface interne, d'électrodes 22, 32 également transparentes.

Ces électrodes 22, 32 sont reliées à des moyens d'alimentation électrique 40 qui permettent d'appliquer un champ électrique E, d'orientation perpendiculaire aux plaques 20, 30, et de polarité et amplitude contrôlées, sur le matériau cristal liquide 10.

Le matériau cristal liquide 10 est formé de molécules de cristal liquide nématique d'anisotropie diélectrique positive.

L'une au moins des plaques 30 définit un ancrage quasi bistable. Cette notion sera explicitée par la suite.

Par ailleurs les moyens d'alimentation électrique principaux 40 sont adaptés pour appliquer sur le matériau cristal liquide 10 un champ électrique temporaire E apte à casser l'ancrage sur la plaque précitée 30 et permettre ensuite, sous l'effet d'instabilités hydrodynamiques, des orientations différentes localisées des molécules de cristaux liquides correspondant aux orientations privilégiées de l'ancrage quasi-bistable.

Le dispositif conforme à la présente invention opère par conséquent par cassure de l'alignement de surface sur cette plaque 30 grâce à des impulsions électriques de polarité bien définie issues des moyens 40.

Selon l'invention la commutation est opérée entre une texture ordonnée et une texture désordonnée.

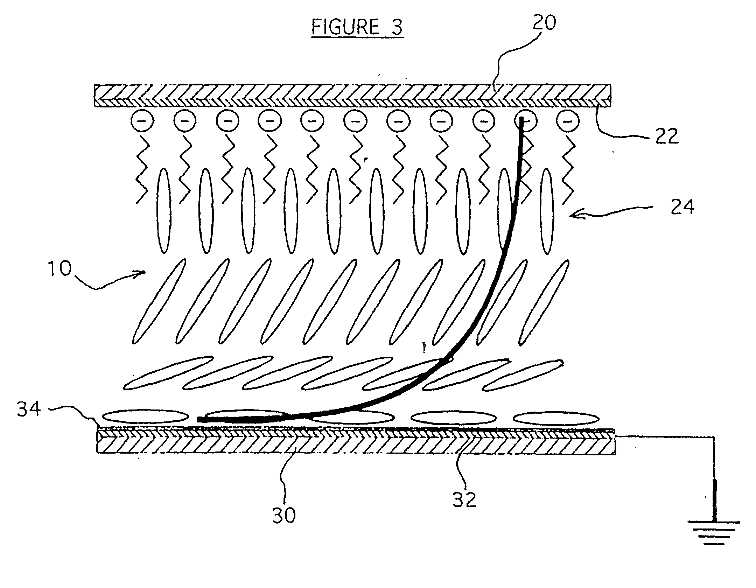

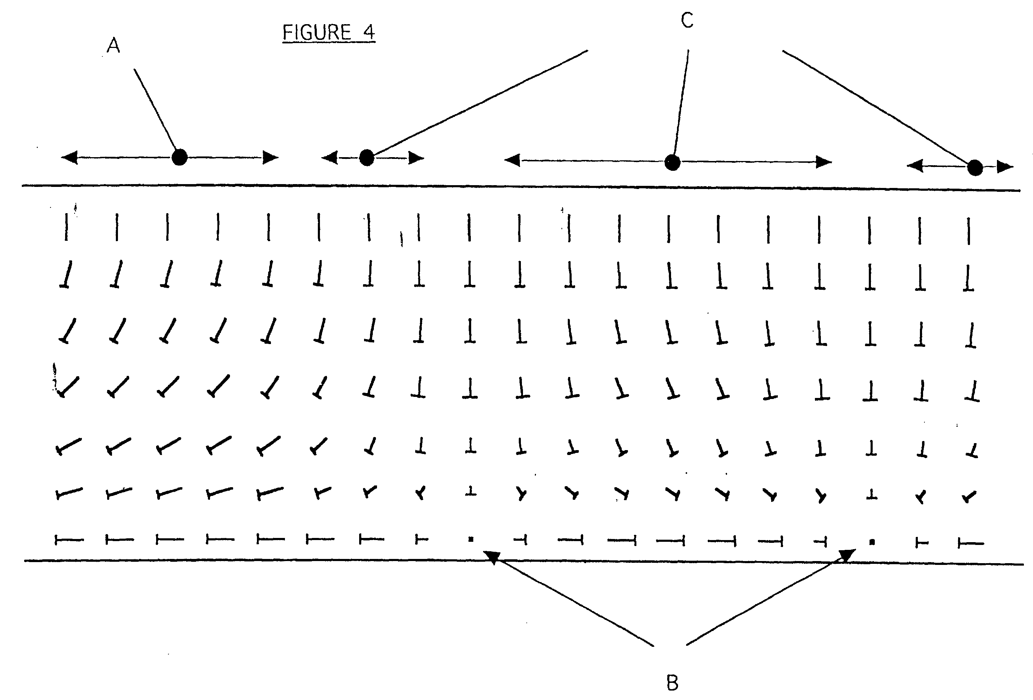

La contre plaque 20 présente de préférence un alignement homéotrope, tandis que la plaque 30 définit un alignement de type planaire, comme on le voit sur les figures 3 et 4 notamment. La géométrie fondamentale de la cellule est donc de type hybride.

Ce dispositif permet d'obtenir des teinte de gris variable par contrôle de l'intensité de la tension de commande issue des moyens d'alimentation 40.

Le dispositif d'affichage conforme à la présente invention ne requiert pas un ancrage bistable pur, mais seulement une surface "compatible" avec un tel ancrage bistable, qui sera dénommé par la suite ancrage "quasi bistable". Un tel ancrage sera explicité plus en détail par la suite. La commutation est obtenue entre une texture hybride ordonnée, qui possède des propriétés optiques similaires à une texture planaire, et un état désordonné résultant d'un réseau de défauts de surface qui sont stabilisés par l'ancrage quasi-bistable. Le contraste optique peut être obtenu, par exemple, en plaçant la cellule entre deux polariseurs croisés, l'axe optique de la cellule étant aligné avec l'un des polariseurs. Dans cette configuration, l'état hybride ne transmet pas la lumière, tandis que lorsqu'un réseau de défauts est présent, celui-ci agit comme un dépolariseur, et la lumière est transmise.

On va maintenant expliciter la notion d'ancrage "quasi-bistable".

Une plaque 30 présente un ancrage quasi-bistable pour un cristal liquide nématique, lorsque l'état de surface fondamental est monostable, planaire, mais des ancrages bistables à énergie légèrement supérieure, également planaires ou légèrement obliques, sont également présents.

Dans le cadre de la présente invention un tel ancrage quasi-bistable peut être obtenu à l'aide d'un dépôt oblique de SiO, à 74° par rapport à la normale à la surface de la plaque, les conditions de revêtement étant proches de celles nécessaires pour obtenir un ancrage bistable oblique pur. Par rapport aux dispositions décrites dans le document [1] "Order electricity and oblique nematic orientation on rough solid surfaces", Europhys. Lett. 5, 697 (1988), M. Monkade et al, ou encore dans le document [1bis] "Critical Behaviour of a Nematic-Uquid-Crystal Anchoring at a Monostable-Bistable Surface Transition", Europhysics Letters, (25) (7), pp527-531 (1994), M. Nobili et al, le dispositif conforme à la présente invention est placé juste en dessous de la région de transition entre les ancrages planaire monostable et oblique dégénéré. L'état fondamental est un axe facile planaire monostable, perpendiculaire au faisceau de dépôt de SiO, mais des directeurs de surface obliques bistables, qui sont symétriques par rapport au plan vertical d'évaporation et métastables, sont également observables.

Un tel traitement de surface est similaire à celui obtenu pour un dispositif nématique bistable exploitant un effet flexoélectrique, mais possède une épaisseur de film SiO inférieure.

D'autres processus permettant d'obtenir des ancrages bistables et quasi-bistables, susceptibles d'être utilisés dans le cadre de la présente invention, sont décrits dans le document [2] "Photoinduced Optical Anisotropy in Langmuir Blodgett Films as a New Method of Creating Bistable Anchoring Surfaces for Liquid Crystal Orientation", J. Phys. II France 5 (1995) 133-142, S. P. Palto et al.

Ce document décrit essentiellement la réalisation d'ancrages bistables à l'aide de films minces de Langmuir-Blodgett présentant une anisotropie optique.

Selon encore une autre variante, l'ancrage quasi-bistable peut être obtenu grâce à une couche de polymère contenant des composants absorbants dichroïques ayant subi le même traitement optique que décrit dans le document [2] précité.

Ainsi l'ancrage quasi-bistable peut être défini par une couche de polymère contenant des composants dichroïques, après deux expositions à la lumière polarisée, dans des directions perpendiculaires.

Les ancrages bistables et quasi-bistables peuvent être rompus par un champ électrique externe E adéquat. La cassure de l'ancrage est due à une réorientation des molécules de surface sous l'effet d'un couple diélectrique. En fait un champ électrique externe E, perpendiculaire aux plaques de confinement 20 et 30, tend à orienter un cristal liquide nématique 10, possédant une anisotropie diélectrique positive ($\varepsilon_a > 0$), perpendiculairement aux électrodes 22, 32 prévues sur les plaques 20, 30 (orientation homéotrope).

Cette transition requiert que la longueur de cohérence électrique $\xi = (1/E) (4\pi K/\varepsilon_a)^{1/2}$ du champ externe soit du même ordre de grandeur que la longueur d'extrapolation L - 500Å de l'ancrage de surface, avec une intensité de champ électrique typiquement de l'ordre de $E= (1/L) (4\pi K/\varepsilon_a)^{1/2} \sim 8$ Volt/μm.

La cassure de l'ancrage permet d'obtenir des transitions rapides entre les différents états de surface pour le matériau cristal liquide 10. Le temps de transition caractéristique est défini par $\tau = 4\pi \eta_s / E^2 \varepsilon_a$, relation dans laquelle $\eta_s$ représente la viscosité en surface. $\tau$ peut descendre en dessous de 1 μsec.

Ce phénomène est évoqué dans les documents [3] "Dynamics of surface anchoring breaking in a nematic liquid crystal", Liquid Crystals, 12, 515 (1992) A. Gharbi et al et [3bis] "Flexoelectrically controlled surface bistable switching in nematic liquid crystals" Appl. Phys. Lett. 60 (9), (1992) R. Barberi et al, auxquels on se reportera utilement pour un bonne compréhension de la présente invention.

Les dispositifs d'affichage conformes à la présente invention exploitent un effet hydrodynamique connu sous le nom "d'effet Felici", qui va maintenant être explicité.

La conductivité d'un cristal liquide nématique est généralement faible. Un tel matériau peut même être considéré comme un diélectrique pur.

Cependant un champ électrique externe élevé peut injecter des charges de polarité donnée dans ce matériau.

Ce phénomène d'injection bien connu de l'homme de l'art peut être favorisé par un traitement approprié de l'interface entre les électrodes 22 et le matériau cristal liquide 10.

Lorsque les charges injectées sont uniformes, elles s'écoulent de façon uniforme sous l'effet du champ électrique E, dans le liquide 10, qui reste stable.

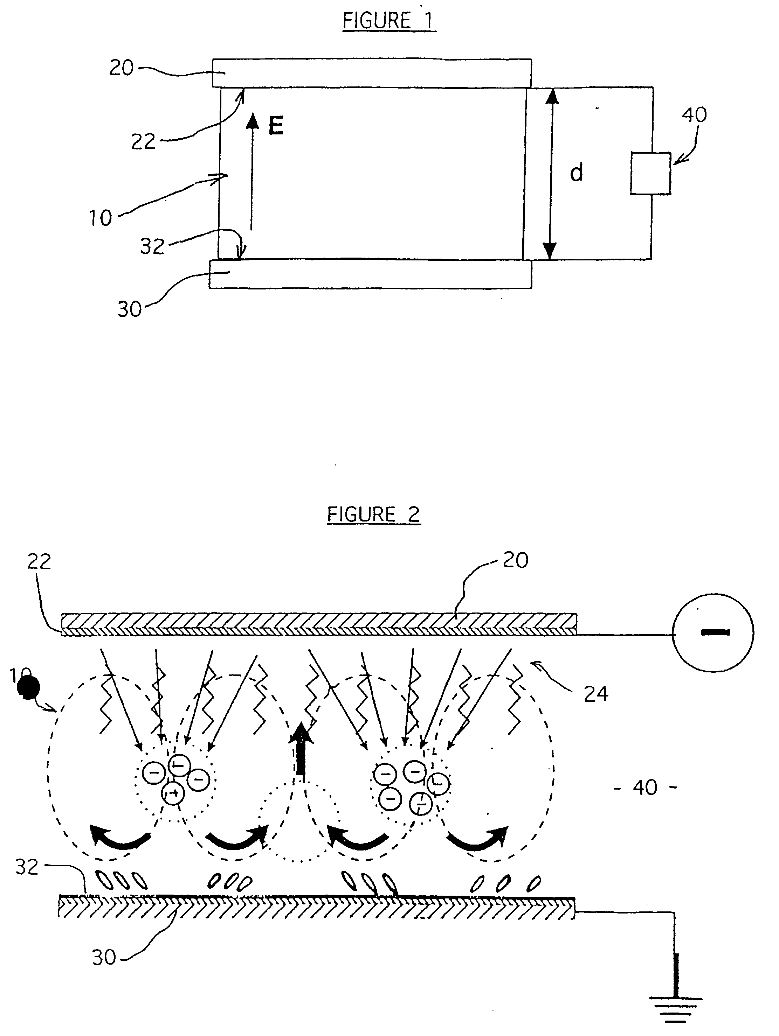

Néanmoins des instabilités dans l'écoulement des charges peuvent être obtenues : les concentrations localisées différentielles résultantes de charges produisent des poussées différentielles sur le liquide 10, qui conduisent à des écoulements sous forme de cellules convectives comme on l'a schématisé sur la figure 2.

Ce comportement connu sous la dénomination d'effet "Felici" est décrit par exemple dans le document [4] "Phénomènes hydro et aérodynamiques dans la conduction des diélectriques fluides", Revue Générale de l'électricité, Juillet-Aout 1969, par N. Felici.

Des convections électro-dynamiques sont obtenues lorsque le seuil de Felici est atteint :

$$qE\, d^3 / \eta D \approx 1$$

Dans l'expression ci-dessus, q représente la densité moyenne de charge par unité de volume, E représente le champ électrique, d représente l'épaisseur de la cellule entre les plaques 20 et 30, η représente la viscosité nématique moyenne et D représente le coefficient de diffusion pour les ions. Un tel processus est schématisé sur la figure 2 annexée.

Les moyens de commande 40 conformes à la présente invention sont donc conçus pour atteindre ce seuil de Felici.

Pour des valeurs fixées de η, D et q, le seuil de Felici montre que la tension $V_F$ requise pour obtenir une turbulence hydrodynamique dans le nématique est proportionnelle à $d^{-2}$.

Plus précisément la figure 2 illustre le mouvement de fluide lorsque le seuil de Felici est atteint dans un dispositif dans lequel un seul type de particules chargées électriquement est présent. Deux cellules convectives voisines tendent à aligner les molécules nématiques proches de la plaque à ancrage quasi-bistable 30, dans des directions opposées par rapport à la normale à la surface, lorsque l'ancrage de surface est cassé. Plus précisément encore, comme cela sera expliqué par la suite, en l'espèce, l'injection des ions négatifs, responsables de la convection est favorisée par le matériau de revêtement prévu pour définir un alignement homéotrope sur la plaque supérieure 20, soit par exemple du DMOAP silane.

Des défauts de surface sont souvent observés sur des plaques à ancrages bistables ou quasi-bistables. Sur une plaque purement bistable, ils séparent des domaines nématiques correspondant à des orientations faciles différentes. Sur une plaque quasi-bistable 30, telle qu'utilisée dans le cadre de la présente invention, leur topologie est compatible avec l'ancrage oblique dégénéré quasi-bistable, et ils peuvent demeurer métastables sur la surface pendant un temps très long.

Le document [5] "Surface walls on a bistable anchoring of nematic liquid crystals" J. Phys. II France 5, 531 (1995), M. Nobili et al est cité à titre de référence pour la description de telles structures nématiques de surface.

Un réseau de défauts de surface peut être créé sur la plaque 30 à ancrage quasi-bistable, par application d'un champ électrique externe E d'une intensité suffisante pour permettre une cassure de l'ancrage, lorsque par ailleurs des conditions de déplacement convectif du fluide 10 sont réunies dans le dispositif.

Si le seuil précité de Felici est atteint, le déplacement convectif de fluide induit des couples hydro-dynamiques sur les directeurs nématiques de surface. Comme on l'a représenté sur la figure 2, deux cellules convectives voisines tendent à aligner les molécules nématiques sur la plaque quasi-bistable 30, dans des directions opposées par rapport à la normale à la surface.

Quand on coupe le champ électrique, les molécules de surfaces retombent sur l'orientation planaire, dans les directions opposées où l'écoulement les a inclinées. Ces directions opposées créent sur la plaque quasi-bistable 30 des défauts de surface, compatibles avec l'ancrage quasi-bistable.

Il peut se produire aussi des défauts de volume qui peuvent se déplacer vers la plaque quasi-bistable 30, et devenir des défauts de surface.

Par ailleurs dans le cadre de la présente invention, le réseau de défauts précité sur la surface interne de la plaque 30 peut être effacé par une impulsion électrique issu des moyens 40, qui n'induit pas le déplacement convectif du matériau cristal liquide nématique 10, mais dont l'intensité est suffisante pour casser l'ancrage de surface.

Ces conditions peuvent être obtenues grâce à une impulsion de tension, dont la polarité est opposée à celle requise pour obtenir l'effet Felici, et un traitement adéquat de l'électrode 22 pour éviter l'injection de charges. Les mêmes conditions peuvent être obtenues alternativement avec des impulsions électriques dont le signe est le même que celui des impulsions d'écriture, et l'intensité est suffisante pour casser l'ancrage de surface, mais légèrement plus faible que celle nécessaire pour la création des instabilités de Felici, si le seuil Felici est supérieur au seuil-de cassure de surface.

Une autre façon d'effacer, plus simple, consiste à utiliser un champ E alternatif haute fréquence, qui casse la surface sans créer l'instabilité de Felici ou d'autres instabilités.

On va maintenant procéder à la description d'un mode de réalisation particulier d'un dispositif d'affichage conforme à la présente invention.

Le matériau 10 utilisé est un matériau cristal liquide nématique présentant une anisotropie diélectrique positive, $\varepsilon_a > 0$. Plus précisément dans le cadre d'un mode de réalisation préférentiel de la présente invention, on utilise du 5CB pentylcyanobiphenyl possédant une anisotropie diélectrique de l'ordre de 10.

Un pixel est réalisé entre deux plaques transparentes parallèles 20, 30, qui contiennent entre elles le cristal liquide nématique 10 comme illustré sur la figure 1. Les plaques 20, 30 sont munies d'électrodes 22, 32 constituées de film transparent fin de ITO réalisé par dépôt. L'une des plaques 20 est munie d'un revêtement 24 de silane. Ce matériau est connu pour faciliter l'injection de charges unipolaires (voir document Felici précité). Le silane est également connu pour favoriser des orientations préférentielles du nématique en surface.

Bien entendu le silane peut être remplacé par tout matériau fonctionnellement équivalent.

Plus précisément encore, l'une des plaques 20 est traitée pour définir un axe facile unique homéotrope avec un revêtement 24 de DMOAP (Ortho-decil-dimethil-[3-(trimethoxi silil)-propil]- ammonium chloride). La seconde plaque 30 est traitée pour définir un ancrage quasi-bistable, grâce à un revêtement 34 de SiO, tel que décrit précédemment.

L'état fondamental de la cellule obtenu est une texture hybride telle qu'illustrée sur la figure 3. Les molécules du cristal liquide 10 prennent une orientation homéotrope sur la plaque 20 et une orientation planaire sur l'autre plaque 30, grâce à l'axe planaire fondamental d'orientation facile de la surface quasi-bistable.

Un réseau de défauts de volume peut être créé à l'aide d'impulsions électriques appropriées issues des moyens 40, grâce à des instabilités électro-hydrodynamiques. Un tel réseau est généralement repoussé par une surface monostable classique. En revanche la plaque 30 quasi bistable accepte les défauts de surface, ce qui stabilise la configuration de volume.

Les deux textures, hybride et désordonnée, ne possèdent pas la même énergie. L'état hybride est préféré, du fait qu'il correspond à un état de moindre énergie. Néanmoins le réseau de défauts de surface est parfaitement stable lorsque sa densité est suffisament élevée, car ils se bloquent les uns les autres.

La durée de vie d'un défaut unique peut être contrôlée de quelques millisecondes à plusieurs secondes en modifiant les conditions de dépôt de SiO. Des conditions de dépôt proches d'une configuration bistable déterminent une durée de vie supérieure pour les défauts de surface.

Les inventeurs ont réalisé différents tests en appliquant un champ électrique E sur le matériau 10, entre les électrodes 22, 32, perpendiculairement aux plaques 20, 30. Au cours de ces essais, la masse des signaux de commande était reliée aux électrodes 32 de la plaque 30 à ancrage quasi-bistable traitée par SiO.

Les tests ont été réalisés sur des dispositifs d'affichage à pixel unique et sur des dispositifs d'affichage à pixels multiples.

Les dispositifs d'affichage utilisés possèdent des épaisseurs variant entre 1 et 10 μm.

Les essais ont été opérés en lumière transmise, le dispositif étant placé entre deux polariseurs croisés. Pour celà l'axe optique du dispositif, défini lorsque le cristal liquide occupe sa configuration hybride de repos, est aligné avec l'axe optique de l'un des polariseurs.

Dans sa configuration hybride, le dispositif se comporte comme une lame biréfringente uniaxe classique, dont l'anisotropie optique est la moitié de celle d'une cellule nématique planaire uniforme classique de même épaisseur. Aucune lumière n'est transmise en raison de configuration optique retenue, entre deux polariseurs croisés.

Par contre lorsque une structure tordue est obtenue comme illustrée sur la figure 4, en présence d'un réseau de défauts de surface suite à l'application d'impulsions de champ adéquates, la lumière est dépolarisée par les zones tordues autour de chaque défaut, et par conséquent de la lumière est transmise.

Sur cette figure 4 on a schématisé en A une zone de configuration hybride, sans torsion, loin des défauts, en B deux défauts de surface, et en C des zones de large torsion près de ces défauts.

L'intensité de lumière transmise dépend de la densité des défauts et par conséquent de l'intensité des impulsions de commande appliquées. En effet lorsque les défauts ont une densité maximale, les configurations résultantes de rouleaux d'écoulement de taille comparable à l'épaisseur de la cellule, induisent une rotation de 30° à 90° à la polarisation de la lumière, sur la quasi-totalité de la surface du dispositif, pourvu que le régime de Mauguin soit respecté. Sur ce point on pourra se référer au document [6] P. G. de Gennes, "The Physics of liquid crystals", Clarendon Press. Oxford 1974.

Cette condition est respectée pour des dispositifs ayant une épaisseur au moins égale à 4 μm par exemple.

Les inventeurs ont en particulier effectué les observations suivantes sur des dispositifs d'épaisseur de 4 et 8 μm, possédant un revêtement de DMOAP 24, un cristal liquide type 5CB et un dépôt de SiO 34 à 75° d'une épaisseur de 155Å.

Le dispositif en question était observé à l'aide d'un microscope Zeiss polarisant, entre polariseurs croisés. La lumière transmise à travers le dispositif était recueillie sur une photodiode et son intensité en fonction du temps enregistrée sur un oscilloscope numérique et imprimée sur papier.

En l'espèce les deux électrodes 22 et 32, sur les plaques 20 et 30 étaient reliées aux moyens 40 conçus pour générer des impulsions carrées de largeur et amplitude variables et contrôlées.

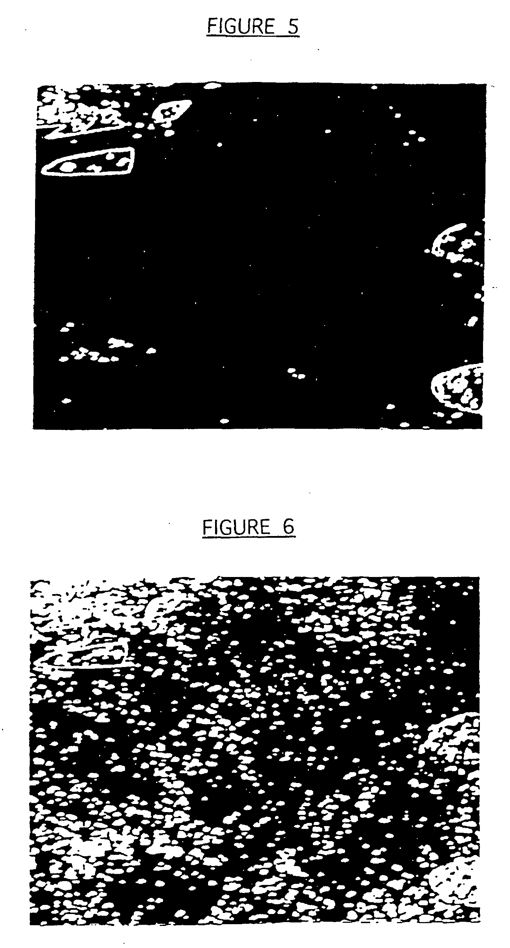

En l'absence d'excitation électrique, l'état stable de la cellule correspond à la configuration hybride, sans défaut. Le dispositif présente par conséquent un aspect noir, à travers les polariseurs croisés, comme illustré sur la figure 5.

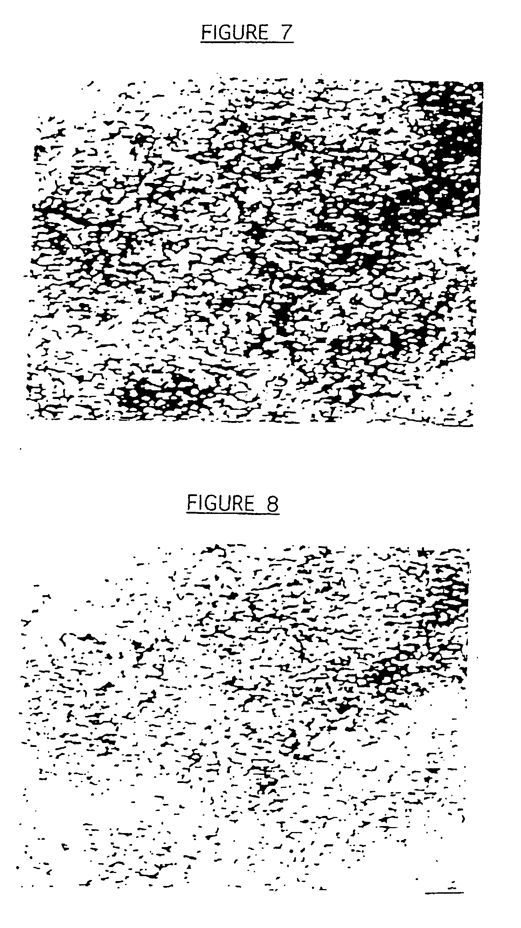

Pour la cellule d'épaisseur 4μm, par contre, l'application d'une impulsion carrée négative sur l'électrode 22, d'une amplitude de 50 Volts et d'une durée de 100 μsec, crée le réseau de défauts de surface précité. La cellule se présente alors sous l'aspect brillant illustré sur la figure 8.

L'application ultérieure d'impulsions négatives, similaires à la première précitée, ne modifie pas l'aspect brillant.

Par contre l'application d'une impulsion positive sur l'électrode 22, d'une amplitude de 40 Volts et d'une durée de 100 μsec permet de retrouver la texture hybride de départ et par conséquent l'aspect noir illustré sur la figure 5.

Là encore l'application d'impulsions positives successives, similaires à celle précitée, est sans effet sur les dispositif qui reste à l'état noir.

En l'absence d'autre excitation électrique, la cellule reste à l'état noir.

Les inventeurs ont par contre constaté que l'état brillant pouvait être moins stable, sa durée de vie dépendant en particulier des caractéristiques du revêtement de SiO, de la densité des défauts et de l'épaisseur de la cellule, pouvant aller de quelques msec à plusieurs heures.

Les inventeurs ont également démontré qu'une échelle de gris pouvait être obtenue, pour une durée fixe d'impulsion électrique négative de commande, en faisant évoluer-son amplitude, afin d'obtenir une densité différente de réseau de défauts de surface.

Les figures 6 et 7 représentent ainsi l'aspect de la cellule de 8μm après excitation par des impulsions négatives dont l'amplitude est inférieure à celle requise pour obtenir la saturation de densité de défauts de surface, comme illustré sur la figure 8. L'intensité des impulsions correspondant à la figure 7 est supérieure à celle des impulsions correspondant à la figure 6. Les figures 6 à 8 montrent que la densité des défauts de surface augmente progressivement avec l'intensité des impulsions de commande appliquées.

Les représentations des figures 5 à 8 correspondent à une zone observée de l'ordre de 1mm².

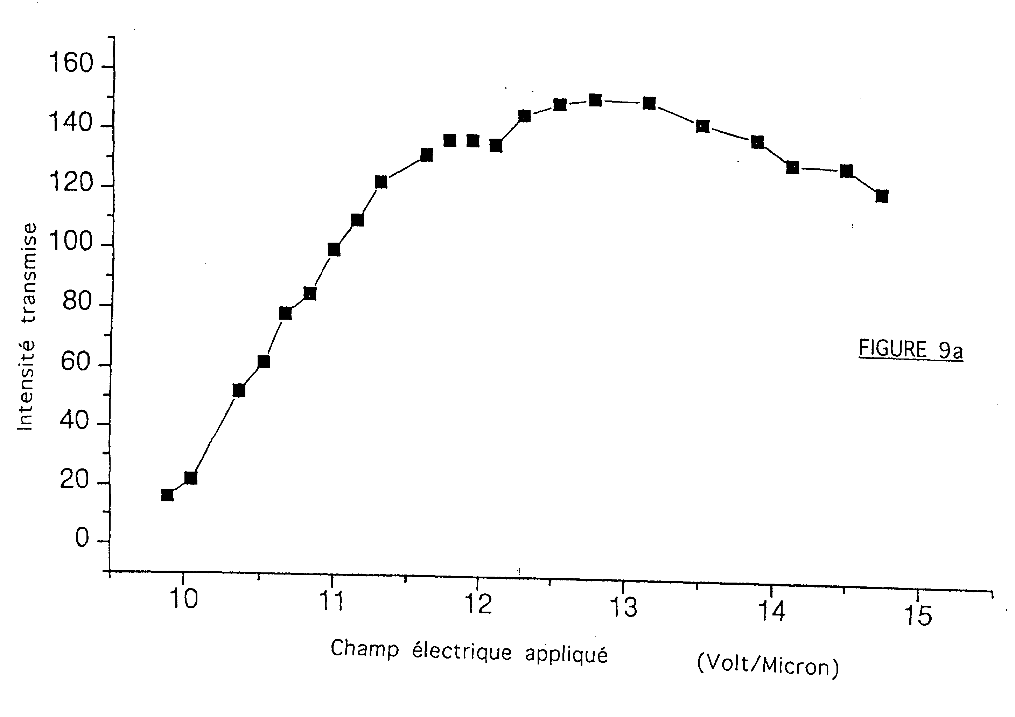

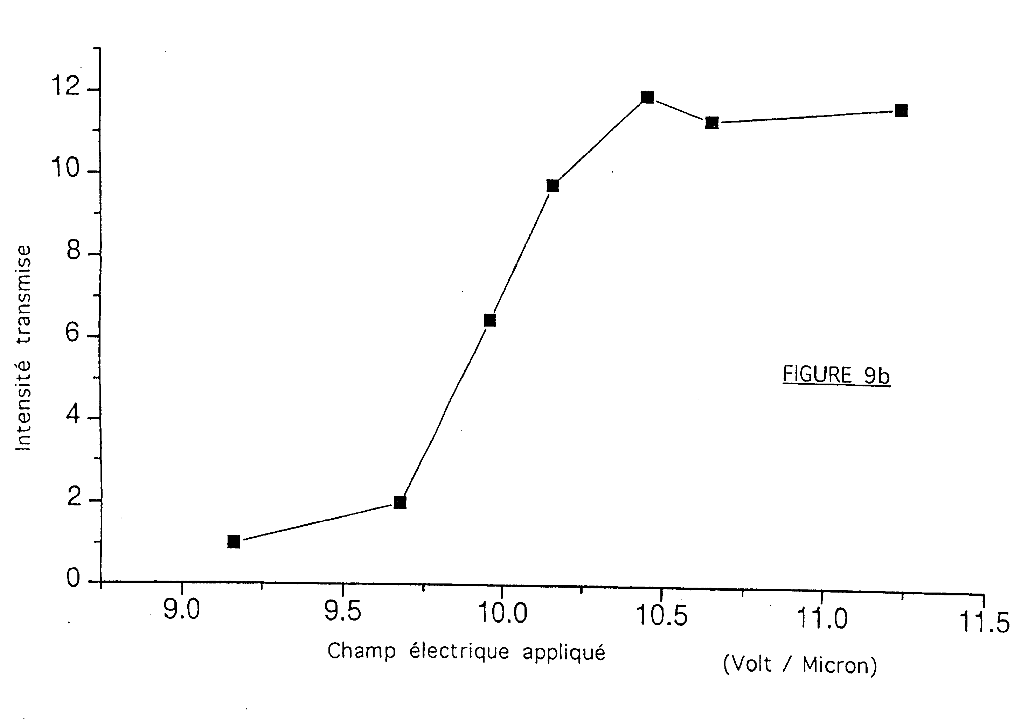

On a représenté par ailleurs sur les figures 9a et 9b l'intensité optique transmise, en fonction de l'intensité du champ électrique appliqué, pour deux échantillons de 5 μm et 1,9 μm respectivement d'épaisseur.

On comprend à l'examen de ces figures 9a et 9b que le contraste optique peut aisément être modulé dans une plage de 1 à 100 simplement en modifiant l'intensité du champ électrique dans une gamme de 2 Volts/μm (c'est à dire pour un échantillon d'une épaisseur de 4 μm, à l'aide d'une modulation de 8 volts par rapport à la valeur de saturation de l'ordre de 50 volts).

La figure 9a montre également que lorsque la tension appliquée est trop élevée, la densité de défauts de surface tend à baisser. Ceci montre que l'effacement de la cellule peut être obtenu avec des impulsions d'amplitude élevée, de même polarité que celles utilisées pour l'inscription, c'est à dire de même polarité que les impulsions utilisées pour passer de l'aspect de la figure 5 à l'une des figures 6 à 8.

Les inventeurs ont obtenu un contraste optique maximal de 200:1 pour un échantillon d'une épaisseur de 8 μm, de 160:1 pour une épaisseur de 5 μm et de 120:1 pour une épaisseur de 1,9 μm.

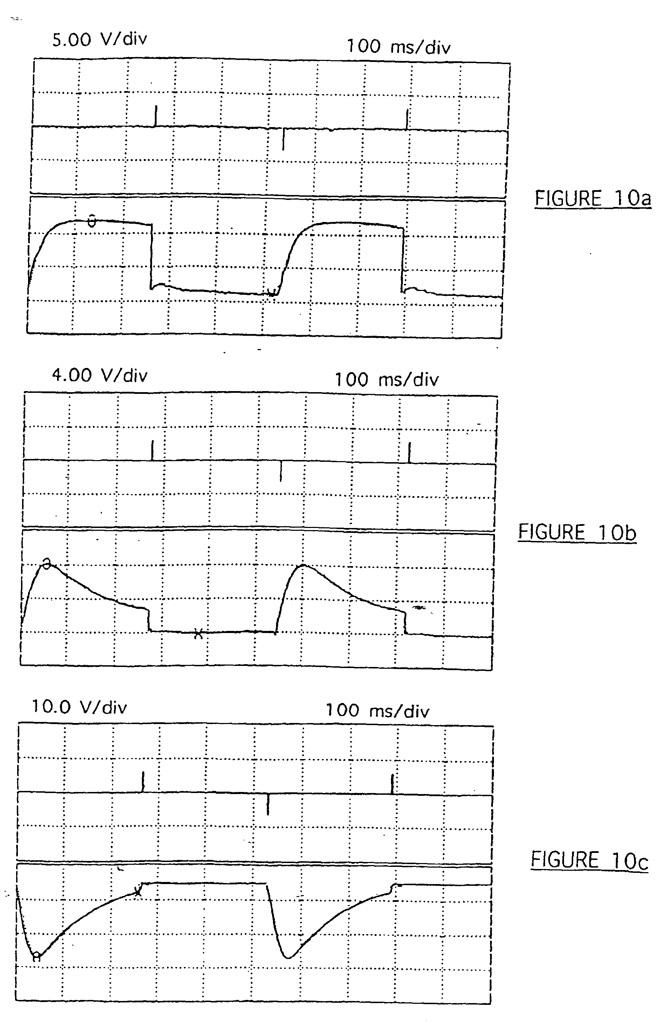

La figure 10a représente une courbe d'intensité de lumière transmise, en fonction du temps, pour un échantillon d'une épaisseur de 10 μm, suite à des applications successives d'impulsions négatives d'inscription et positives d'effacement illustrées sur le haut de cette même figure 10a.

Les figures 10b et 10c représentent des courbes similaires pour des échantillons d'une épaisseur respectivement de 5 μm et 1,9 μm.

En l'espèce, la durée des impulsions étaient de 150 μsec pour tous les échantillons.

On peut observer à partir des figures 10 que, pour la transition de l'aspect noir vers l'aspect brillant, le retard typique entre l'impulsion d'excitation et le maximum d'intensité de la lumière transmise varie de 25 msec pour la cellule la moins épaisse à 70 msec pour la cellule la plus épaisse.

La transition opposée de l'état brillant vers l'état noir, est plus rapide, de l'ordre de la milliseconde.

Il apparait également que pour les mêmes revêtements de surface, la durée de vie des défauts de surface est supérieure pour les échantillons plus épais.

Ceci est du au fait que les défauts de surface imposent des énergies de distortion sensiblement plus élevées sur les échantillons minces que pour les échantillons plus épais.

Ainsi le comportement illustré sur la figure 10a est très proche d'un dispositif purement bistable, sur la figure 10b les défauts de surface sont moins stables et le contraste optique décroit après un maximum, et sur la figure 10c les défauts de surface disparaissent après 0,5sec.

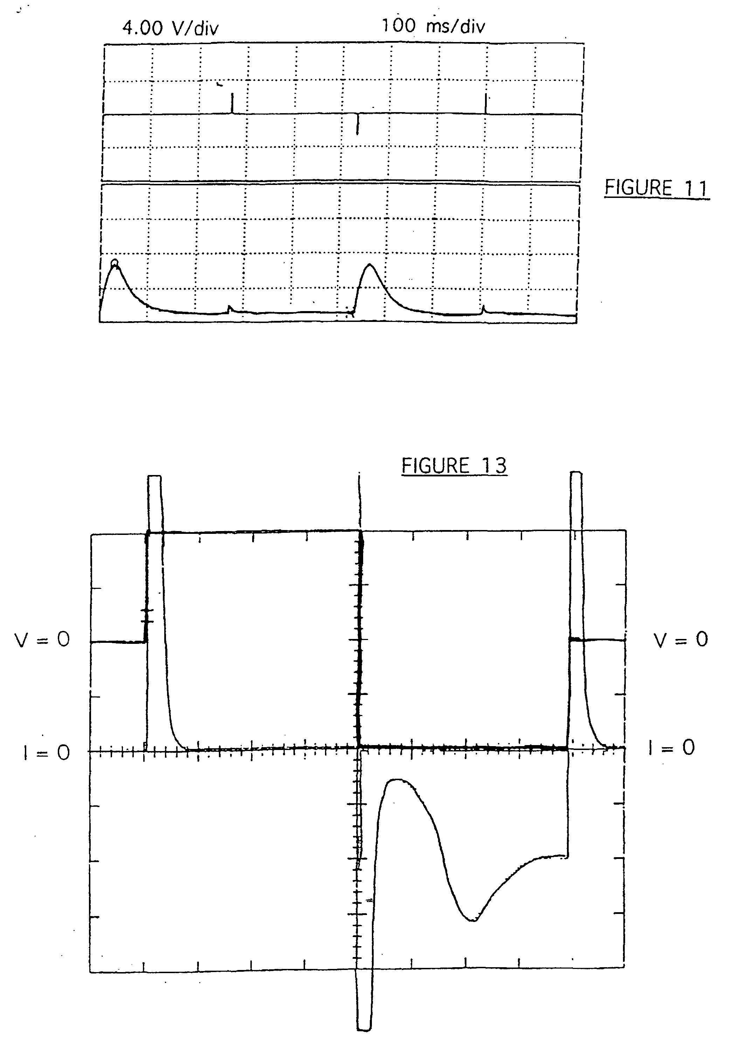

On a représenté sur la figure 11 l'intensité de lumière transmise en fonction du temps, pour un échantillon d'une épaisseur de 5 µm lorsque l'intensité de l'impulsion d'écriture est inférieure au seuil requis pour la formation des défauts de surface, mais suffisante pour initier la cassure de l'ancrage quasi-bistable. La figure 11 correspond à une impulsion négative de 150 µsec, et d'une intensité de 45 volts. Le maximum de contraste optique de cet effet optique transitoire est de l'ordre de 60:1 et la lumière est transmise avec une intensité élevée pendant plus de 50 msec. Un tel effet transitoire peut être utilisé par exemple pour réaliser des affichages multiplexés sur un appareil vidéo. Dans ce cas en effet le temps de persistence requis pour le pixel brillant est de l'ordre de quelques dizaines de millisecondes. Naturellement il apparait clairement que dans ce cas aucune impulsion d'effacement n'est requise, puisque le phénomène mis en jeu est transitoire.

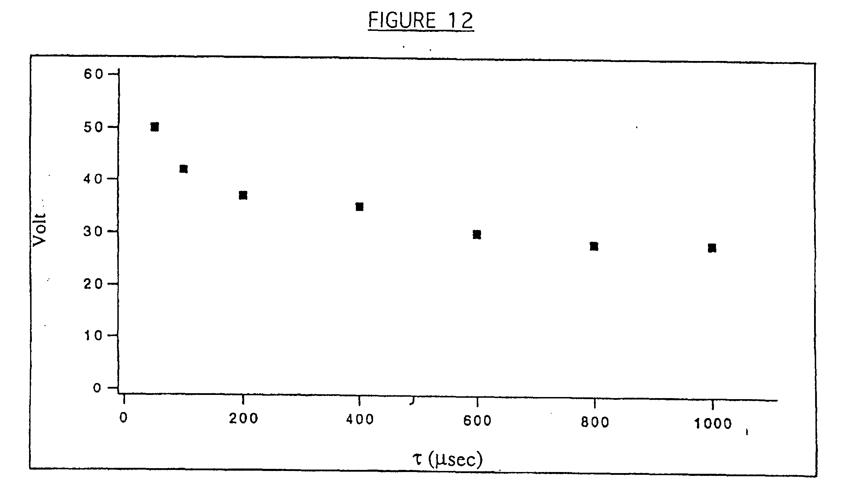

Les inventeurs ont également mesuré la dynamique de la réponse électrique obtenue. Pour celà des impulsions électriques carrées d'amplitude V et de durée $\tau_V$ ont été utilisées. Le seuil requis pour inscrire complètement tous les défauts à densité de saturation $V_s(\tau)$ a été mesuré. Les résultats obtenus sont mentionnés sur la figure 12.

Le seuil de tension de polarité opposée nécessaire pour un effacement complet du pixel a également été mesuré. Les résultats obtenus sont très similaires à ceux requis pour l'inscription et illustrés sur la figure 12.

Pour tester le mécanisme d'effacement les inventeurs ont également utilisé des impulsions alternatives de valeur moyenne nulle, et de même amplitude et durée. Avec une telle impulsion alternative les inventeurs ont obtenu un effacement comparable à celui résultant d'impulsions de polarité définie, mais avec de légérs changements d'amplitude. Ce constat démontre que le processus d'effacement est un processus purement diélectrique, sans rapport avec les ions.

Dans les conditions de l'expérience pour un échantillon de 4µm, les inventeurs ont constaté que le seuil de Felici était de 15 volts.

Les tensions d'inscription et d'effacement sont de l'ordre de 50 volts pour 50µsec, dans le régime vidéo. Elles peuvent être réduites en utilisant un échantillon plus mince, puisque le seuil de rupture de surface est bien au dessus du seuil de Felici. Une augmentation du courant injecté permet de réduire V, à épaisseur constante, comme indiqué précédemment.

On peut également réduire le seuil de Felici, par traitement approprié des électrodes. Pour celà on peut par exemple réaliser les électrodes d'injection de courant, non pas sous forme uniforme, mais sous forme de bandes électriquement conductrices et non conductrices, avec une période qui, comparée à la taille des défauts et à l'épaisseur de la cellule, favorisent la formation d'agglomérats d'ions dans la cellule, et par conséquent réduisent le seuil de Felici. En pratique ceci peut être obtenu par frottement de la surface de revêtement constituant l'électrode.

Dans la mesure ou les transitions de surface observées sont soumises à des seuils bien définis, le dispositif d'affichage conforme à la présente invention autorise une commande de type multiplexage.

Les inventeurs ont également fait les observations suivantes qui justifient le modèle présenté précédemment.

Lorsqu'un échantillon est soumis à une série d'impulsions électriques rapides, d'une amplitude légèrement inférieure au seuil requis pour la formation de défauts de surface et d'une fréquence suffisante, des instabilités électrodynamiques sont observées dans la cellule. Cette condition peut être obtenue par exemple en soumettant un échantillon d'une épaisseur de 8 µm à des impulsions négatives (les mêmes que celles qui créent les défauts) d'une amplitude de 44 volts, d'une longueur de 600 µ sec et d'une fréquence de 18 Hz. La longueur de l'impulsion est ici choisie supérieure au cas de la commutation de surface précité pour mettre en évidence le mouvement de fluide induit.

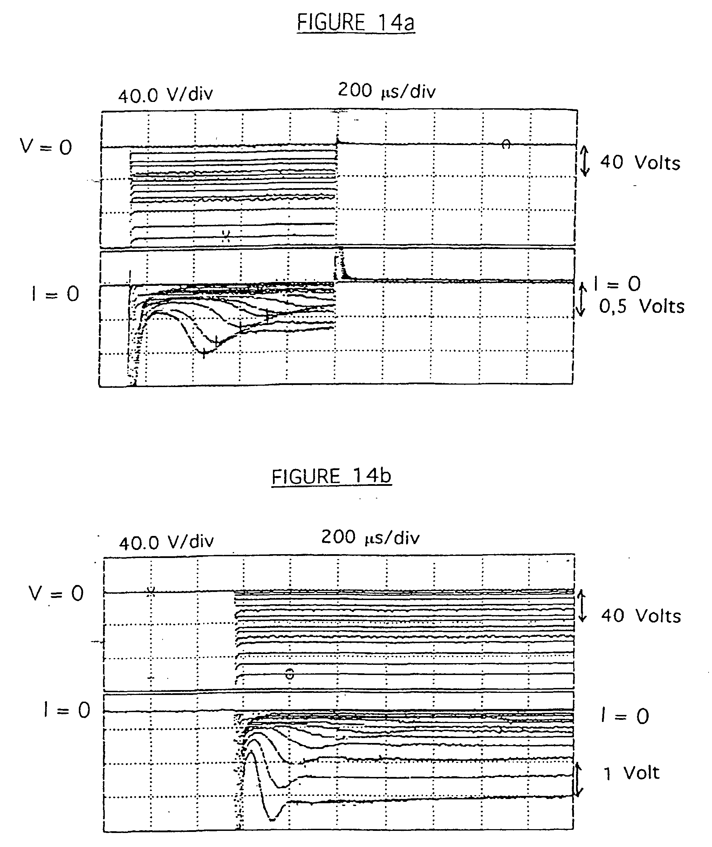

L'activité électrodynamique observée est due au mouvemnt des ions dans la cellule. Cette hypothèse est prouvée par la mesure du courant électrique dans la cellule cristal liquide. La figure 13 représente la forme typique du courant qui passe à travers une cellule dans les deux cas d'impulsions positive et négative.

L'impulsion positive (qui efface les défauts de surface) génère seulement un courant de décharge de condensateur combiné avec un pic rapide de réorientation diélectrique, qui n'est pas visible sur la figure 13.

Lorsque l'impulsion négative (qui crée les défauts) est présente, un second pic plus lent dû au courant d'ions injecté, apparait.

Ce comportement indique que la majeure partie des ions mobiles présents dans la cellule possède le même signe. Ainsi seule une polarité d'impulsions induit des instabilités électro-dynamiques, qui sont responsables de la création des défauts de surface. Dans la géométrie décrite, le signe de l'ion responsable de ce phénomène est négatif. Les ions ne peuvent être dus à une dissociation moléculaire naturelle du matériau nématique, qui est utilisé aussi pur que possible, puisque dans un tel cas le même phénomène serait observé pour les deux polarités d'impulsion. La source d'ions négatifs est constituée par le matériau utilisé pour assurer l'alignement homéotrope. En fait le DMOAP peut injecter des ions négatifs Cl⁻ dans le matériau nématique ou favoriser l'injection d'autres ions négatifs, tels que OH- par exemple. Ces ions sont déplacés par le champ électrique externe et des convections électro-dynamiques sont obtenues lorsque le seuil de Felici est atteint.

On a illustré sur les figures 14a et 14b la croissance du pic de Felici dans le courant d'ions pour différentes intensités d'impulsions. L'échantillon de la figure 14a possède moins d'ions que celui de la figure 14b. Conformément à la théorie, les courbes des figures 14 montrent que plus la densité d'ions est élevée, plus le pic de Felici est rapide.

Il faut noter que la longueur d'impulsion la mieux adaptée pour la création d'un réseau de défauts de surface est déterminée expérimentalement dans la fourchette comprise entre le point de départ et le maximum du pic de Felici, c'est à dire près du maximum du courant de masse du liquide.

La formation du réseau de défauts de surface est, dans tous les cas, soumise à la cassure de l'ancrage de surface, qui définit un second seuil pour le champ appliqué.

Il est important également de bien comprendre l'influence de l'épaisseur d du dispositif sur le phénomène précédemment décrit.

Pour faciliter la cassure de l'ancrage de surface avec des potentiels d'intensité raisonnable, on a intérêt à réduire l'épaisseur, pour augmenter le champ, puique la cassure de l'ancrage de surface est un effet de champ. Ceci est également utile pour réduire le temps de relaxation de la texture, qui croit en $d^2$.

Cependant d'un autre côté, il est nécessaire d'atteindre le seuil de Felici pour créer le modèle de défauts de surface. Ce seuil en tension croît en $1/d^2$.

Il existe par conséquent une épaisseur critique $d_c$ pour laquelle le seuil de Felici et le seuil de cassure d'ancrage en surface sont optimisés.

Le seuil de Felici donne $qVd^2 = Const_1$. La cassure de l'ancrage de surface donne $V/d = Const_2$. On obtient ainsi la relation $qV^3 = Const_3$ ou $qd^3 = Const_4$.

On peut bien entendu améliorer le système en augmentant la densité de charge injectée q pour réduire V ou réduire d.

Bien entendu la présente invention n'est pas limitée aux modes de réalisation précédemment décrits, mais s'étend à toutes variantes conformes aux revendications annexées.

L'homme de l'art comprendra par ailleurs que l'injection de charge unipolaire n'est pas nécessairement produite sur la plaque 20 homéotrope. Elle pourrait être produite par un traitement convenable sur la plaque 30 quasi-bistable. A titre d'exemple non-limitatif, on pourra utiliser sur la plaque 30 un traitement de surface par un silane ionique compatible avec un ancrage quasi-bistable. Ce silane pourra être choisi parmi la famille des matériaux donnant seuls un ancrage planaire. L'ancrage homéotrope sur la plaque 20 serait alors produit par un silane non-ionique (pour ne pas favoriser l'injection) ou ionique, mais permettant l'injection.

En outre la présente invention n'est pas limitée à la création de défauts de surface par effet Felici. En effet la création de défauts de surface par induction de vortex d'écoulement, au dessus d'une plaque d'ancrage brisé, peut résulter d'autres instabilités électrodynamiques.

Parmi ces instabilités, on peut citer les rouleux convectifs de Williams, qui est une instabilité dynamique permanente, et toutes les instabilités statiques de texture dans leur régime d'établissement transitoire : chaque fois que l'on réoriente une texture nématique, on crée un courant hydrodynamique transitoire qui peut apparaître sous forme de rouleaux convectifs et créer l'amorce des défauts de surface nécessaire à l'inscription. L'effacement se fera en appliquant un champ alternatif de fréquence supérieure à la fréquence de relaxation des charges $\omega = 4\pi\sigma/\varepsilon$, où $\sigma$ est la conductivité du cristal.liquide et $\varepsilon$ sa constante diélectrique. Typiquement on utilisera une impulsion alternative de période unique de durée $\tau$ compatible avec la cadence d'inscription de l'afficheur. Les instabilités précitées sont décrites dans l'ouvrage : The Physics of Liquid Crystals, P.G. de Gennes and J. Prost, Oxford Science Publications, Clarendon Press, Oxford (1993). Les écoulements associés aux changements de texture sont aussi décrits dans cet ouvrage classique.

Par ailleurs dans le cadre de la présente invention, l'expression ancrage "quasi-bistable" doit être compris comme signifiant que l'une au moins des plaques 30 définit un état fondamental monostable et au moins deux états d'ancrage possible d'énergie supérieure, ces états possibles d'énergie supérieure pouvant être supérieurs à deux. En d'autres termes l'expression "quasi-bistable" doit être considérée comme englobant les ancrages "quasi-multistables".

Selon une autre variante de réalisation conforme à la présente invention, chacune des deux plaques 20 et 30 est adaptée pour définir un ancrage quasi-bistable.

## Revendications

**1.** Dispositif d'affichage à base de cristal liquide, comprenant un matériau cristal liquide nématique (10) d'anisotropie diélectrique positive pris en sandwich entre deux plaques de confinement (20, 30) transparentes munies chacune d'électrodes transparentes (22, 32),
l'une au moins des plaques (30) définissant un ancrage quasi-bistable comprenant une composante d'ancrage planaire et des moyens d'alimentation électrique principaux (40) adaptés pour appliquer sur le matériau cristal liquide (10) un champ électrique temporaire apte à casser l'ancrage sur la plaque précitée (30) **caractérisé par le fait que** l'ancrage quasi-planaire et les moyens d'alimentation électrique sont adaptés pour permettre après cassure de l'ancrage, sous l'effet d'instabilités hydrodynamiques, des mouvements de fluide propres à conduire à la formation d'une texture désordonnée selon des orientations différentes localisées des molécules de cristal liquide (10) correspondant aux orientations privilégiées de l'ancrage quasi-bistable résultant d'un réseau de défauts nématiques de surface.

2. Dispositif d'affichage selon la revendication 1, **caractérisé par le fait qu'**il comprend en outre des moyens d'alimentation électrique secondaires (40) aptes à appliquer sur le matériau cristal liquide (10) un champ électrique d'effacement permettant de rétablir un ancrage d'orientation uniforme sur la plaque (30) présentant un ancrage quasi-bistable.

3. Dispositif d'affichage selon l'une des revendications 1 ou 2, **caractérisé par le fait que** la plaque (30) définissant un ancrage quasi-bistable définit un état de surface fondamental monostable tout en autorisant au moins un ancrage bistable d'énergie supérieure.

4. Dispositif d'affichage selon la revendication 3, **caractérisé par le fait que** l'état de surface fondamental monostable correspond à un ancrage planaire, tandis que l'ancrage bistable autorisé correspond à deux orientations obliques symétriques par rapport à l'état de surface fondamental monostable.

5. Dispositif d'affichage selon l'une des revendications 3 ou 4, **caractérisé par le fait que** l'ancrage bistable est défini par évaporation oblique contrôlée de SiO.

6. Dispositif d'affichage selon l'une des revendications 3 ou 4, **caractérisé par le fait que** l'ancrage bistable est défini par des films minces de Langmuir-Blodgett présentant une anisotropie optique après absorption de lumière polarisée dans deux directions perpendiculaires.

7. Dispositif d'affichage selon l'une des revendications 1 à 6, **caractérisé par le fait que** les plaques (20, 30) définissent au repos une structure hybride pour les molécules de cristal liquide (10): planaire sur la plaque (30) d'ancrage quasi-bistable et homéotrope sur la plaque opposée (20).

8. Dispositif d'affichage selon l'une des revendications 1 à 7, **caractérisé par le fait que** chacune des deux plaques (20, 30) définit un ancrage quasi-bistable.

9. Dispositif d'affichage selon l'une des revendications 1 à 8, **caractérisé par le fait que** les moyens d'alimentation électrique principaux (40) sont conçus pour appliquer au matériau cristal liquide (10) des impulsions de champ électrique d'intensité variable permettant de moduler le contraste optique résultant.

10. Dispositif d'affichage selon l'une des revendications 1 à 9, **caractérisé par le fait que** l'une au moins des plaques (20 ou 30) est adaptée pour injecter des charges de polarité contrôlée dans le matériau cristal liquide (10).

11. Dispositif d'affichage selon la revendication 10, **caractérisé par le fait que** la plaque (20) opposée à celle (30) définissant l'ancrage quasi-bistable est adaptée pour injecter des charges de polarité définie dans le matériau cristal liquide (10).

12. Dispositif d'affichage selon l'une des revendications 1 à 11, **caractérisé par le fait que** la plaque (38) quasi-bistable est adaptée pour injecter des charges de polarité définie dans le matériau cristal liquide (10).

13. Dispositif d'affichage selon l'une des revendications 1 à 12, **caractérisé par le fait que** les moyens d'alimentation électrique principaux (40) sont conçus pour atteindre le seuil de Felici donné par la relation $qEd^3/\eta D \simeq 1$, dans laquelle :

q représente la densité moyenne de charge par unité de volume,
E représente le champ électrique,
d représente l'épaisseur de la cellule,
η représente la viscosité nématique moyenne, et
D représente le coefficient de diffusion pour les ions.

14. Dispositif d'affichage selon la revendication 2, **caractérisé par le fait que** les moyens d'alimentation électrique secondaires (40) sont adaptés pour générer des impulsions électriques de polarité opposée à celle des moyens d'alimentation électrique principaux.

15. Dispositif d'affichage selon la revendication 2, **caractérisé par le fait que** les moyens d'alimentation électrique secondaires (40) sont adaptés pour générer des impulsions électriques de même polarité que les moyens d'alimentation électrique principaux, d'intensité suffisante pour casser l'ancrage mais inférieure à celle requise pour l'obtention d'instabilités hydrodynamiques, quand leur seuil est supérieur à celui de l'ancrage de la lame quasi-bistable.

16. Dispositif d'affichage selon la revendication 2, **caractérisé par le fait que** les moyens d'alimentation électrique secondaires (40) sont adaptés pour générer des impulsions électriques alternatives d'intensité comparable à celle des moyens principaux, et de fréquence suffisamment élevée pour ne pas induire d'instabilités hydrodynamiques.

17. Dispositif d'affichage selon l'une des revendications 1 à 16, **caractérisé par le fait que** la plaque (20) opposée à celle (30) définissant un ancrage quasi-bistable possède un revêtement de silane.

18. Dispositif d'affichage selon l'une des revendications 1 à 17, **caractérisé par le fait que** la plaque (20) opposée à celle (30) définissant un ancrage quasi-bistable possède un revêtement de DMOAP silane.

19. Dispositif d'affichage selon l'une des revendications 1 à 18, **caractérisé par le fait que** la plaque (30) définissant un ancrage quasi-bistable, est revêtue d'un matériau silane ionique permettant l'injection, compatible avec l'ancrage quasi-bistable.

20. Dispositif d'affichage selon l'une des revendications 1 à 19, **caractérisé par le fait qu'**il comprend une électrode (22) d'injection de courant constituée d'une alternance de bandes électriquement conductrices et non-conductrices.

21. Dispositif d'affichage selon la revendication 20, **caractérisé par le fait que** l'alternance de bandes est réalisée par frottement d'une électrode (22).

22. Dispositif d'affichage selon l'une des revendiçations 1 à 21, **caractérisé par le fait que** les instabilités hydrodynamiques sont constituées d'instabilité de Felici.

23. Dispositif d'affichage selon l'une des revendications 1 à 22, **caractérisé par le fait que** l'ancrage quasi-bistable est défini par une couche de polymère contenant des composants dichroïques, après deux expositions à la lumière polarisée, dans des directions perpendiculaires.

**Patentansprüche**

1. Flüssigkristallanzeigevorrichtung, die ein nematisches Flüssigkristallmaterial (10) mit positiver dielektrischer Anisotropie zwischen zwei transparenten Begrenzungsplatten (20, 30) jeweils mit transparenten Elektroden (22, 32), wobei wenigstens eine der Platten (30) eine quasi-bistabile Verankerung mit einer planaren Verankerungskomponente definiert, und elektrische Hauptversorgungseinrichtungen (40) zum Anlegen eines temporären elektrischen Feldes an das Flüssigkristallmaterial (10), um die Verankerung an der genannten Platte (30) zu unterbrechen, umfasst, **dadurch gekennzeich-**

**net, dass** die quasi-planare Verankerung und die elektrischen Versorgungseinrichtungen dazu eingerichtet sind, nach dem Unterbrechen der Verankerung Flüssigkeitsbewegungen aufgrund von hydrodynamischen Instabilitäten zu ermöglichen, um Moleküle des Flüssigkristalls (10) in eine Formation mit einer ungeordneten Struktur zu überführen, die verschiedene lokalisierte Orientierungen aufweisen, die den bevorzugten Orientierungen der quasi-bistabilen Verankerung als entsprechen, was zu einem nematischen Ausgangsnetz an der Oberfläche führt.

2. Anzeigevorrichtung nach Anspruch 1, **dadurch gekennzeichnet, dass** sie außerdem sekundäre elektrische Versorgungseinrichtungen (40) zum Anlegen eines elektrischen Feldes an das Material des Flüssigkristalls (10) zum Löschen umfasst, damit eine gleichförmige Verankerungsorientierung an der Platte (30) mit einer quasi-bistabilen Verankerung wieder herstellbar ist.

3. Anzeigevorrichtung nach Anspruch 1 oder 2, **dadurch gekennzeichnet, dass** die Platte (30) eine quasi-bistabile Verankerung und einen fundamentalen, monostabilen Oberflächenzustand definiert, wobei wenigstens eine bistabile Verankerung bei höherer Energie ermöglicht wird.

4. Anzeigevorrichtung nach Anspruch 3, **dadurch gekennzeichnet, dass** der fundamentale, monostabile Oberflächenzustand einer planaren Verankerung entspricht, während die ermöglichte bistabile Verankerung zwei schiefen, in Bezug auf den fundamentalen, monostabilen Oberflächenzustand symmetrischen Orientierungen entspricht.

5. Anzeigevorrichtung nach Anspruch 3 oder 4, **dadurch gekennzeichnet, dass** die bistabile Verankerung durch schiefes, kontrolliertes Aufdampfen von SiO erfolgt.

6. Anzeigevorrichtung nach Anspruch 3 oder 4, **dadurch gekennzeichnet, dass** die bistabile Verankerung durch Langmuir-Blodgett-Dünnschichten definiert wird, die nach Absorption von in zwei senkrechten Richtungen polarisiertem Licht eine optische Anisotropie aufweisen.

7. Anzeigevorrichtung nach einem der Ansprüche 1 bis 6, **dadurch gekennzeichnet, dass** die Platten (20, 30) im Ruhezustand eine Hybridstruktur für die Moleküle des Flüssigkristalls (10) definieren: planar auf der Platte (30) der quasi-bistabilen Verankerung und homöotrop auf der gegenüberliegenden Platte (20).

8. Anzeigevorrichtung nach einem der Ansprüche 1 bis 7, **dadurch gekennzeichnet, dass** jede der beiden Platten (20, 30) eine quasi-bistabile Verankerung definiert.

9. Anzeigevorrichtung nach einem der Ansprüche 1 bis 8, **dadurch gekennzeichnet, dass** die elektrischen Hauptversorgungseinrichtungen (40) dazu dienen, an das Material des Flüssigkristalls (10) elektrische Feldpulse mit variabler Intensität anzulegen, um den resultierenden optischen Kontrast zu modulieren.

10. Anzeigevorrichtung nach einem der Ansprüche 1 bis 9, **dadurch gekennzeichnet, dass** wenigstens eine der Platten (20 oder 30) dazu ausgelegt ist, Ladungen von kontrollierter Polarität in das Material des Flüssigkristalls (10) zu injizieren.

11. Anzeigevorrichtung nach Anspruch 10, **dadurch gekennzeichnet, dass** die Platte (20) gegenüber derjenigen (30), die die quasi-bistabile Verankerung definiert, dazu eingerichtet ist, Ladungen von definierter Polarität in das Material des Flüssigkristalls (10) zu injizieren.

12. Anzeigevorrichtung nach einem der Ansprüche 1 bis 11, **dadurch gekennzeichnet, dass** die quasi-bistabile Platte (38) dazu eingerichtet ist, Ladungen von definierter Polarität in das Material des Flüssigkristalls (10) zu injizieren.

13. Anzeigevorrichtung nach einem der Ansprüche 1 bis 12, **dadurch gekennzeichnet, dass** die elektrischen Hauptversorgungseinrichtungen (40) dazu dienen, dass der Felici-Schwellenwert erreicht wird, der gegeben ist durch $qEd^3/\eta D \simeq 1$, wobei
q die mittlere Ladungsdichte im Einheitsvolumen repräsentiert,
E das elektrische Feld repräsentiert,
d die Dicke der Zelle repräsentiert,
$\eta$ die mittlere nematische Viskosität repräsentiert und
D der Diffusionskoeffizient der Ionen repräsentiert.

14. Anzeigevorrichtung nach Anspruch 2, **dadurch gekennzeichnet, dass** die sekundären elektrischen Versorgungseinrichtungen (40) dazu eingerichtet sind, elektrische Pulse mit der zu den elektrischen Hauptversorgungseinrichtungen entgegengesetzten Polarität zu erzeugen.

15. Anzeigevorrichtung nach Anspruch 2, **dadurch gekennzeichnet, dass** die sekundären elektrischen Versorgungseinrichtungen (40) dazu eingerichtet sind, elektrische Pulse mit der gleichen Polarität wie die elektrischen Hauptversorgungseinrichtungen zu erzeugen, die eine ausreichende Intensität aufweisen, um die Verankerung zu unterbrechen, die jedoch niedriger ist als diejenige, die notwendig ist, um hydrodynamische Instabilitäten herbeizuführen, wenn ihr Schwellenwert größer als der der Verankerung des quasi-bistabilen Blättchens ist.

16. Anzeigevorrichtung nach Anspruch 2, **dadurch gekennzeichnet, dass** die sekundären elektrischen Versorgungseinrichtungen (40) dazu eingerichtet sind, alternierende elektrische Pulse zu erzeugen, deren Intensität vergleichbar ist mit derjenigen der Haupteinrichtungen und deren Frequenz ausreichend hoch ist, damit keine hydrodynamischen Instabilitäten erzeugt werden.

17. Anzeigevorrichtung nach einem der Ansprüche 1 bis 16, **dadurch gekennzeichnet, dass** die Platte (20) gegenüber von derjenigen (30), die eine quasi-bistabile Verankerung definiert, eine Silan-Bedeckung aufweist.

18. Anzeigevorrichtung nach einem der Ansprüche 1 bis 17, **dadurch gekennzeichnet, dass** die Platte (20) gegenüber von derjenigen (30), die eine quasi-bistabile Verankerung definiert, eine DMOAP-Silan-Bedeckung aufweist.

19. Anzeigevorrichtung nach einem der Ansprüche 1 bis 18, **dadurch gekennzeichnet, dass** die Platte (30), die eine quasi-bistabile Verankerung definiert, mit einem ionischen Silan-Material bedeckt ist, das eine mit der quasi-bistabilen Verankerung kompatible Injektion ermöglicht.

20. Anzeigevorrichtung nach einem der Ansprüche 1 bis 19, **dadurch gekennzeichnet, dass** eine Elektrode (22) zum Injizieren von Strom vorgesehen ist, die aus einer Abfolge von elektrisch leitfähigen und nicht-leitfähigen Banden besteht.

21. Anzeigevorrichtung nach Anspruch 20, **dadurch gekennzeichnet, dass** die Abfolge von Banden erzeugt wird durch Reiben einer Elektrode (22).

22. Anzeigevorrichtung nach einem der Ansprüche 1 bis 21, **dadurch gekennzeichnet, dass** die hydrodynamischen Instabilitäten Felici-Instabilitäten sind.

23. Anzeigevorrichtung nach einem der Ansprüche 1 bis 22, **dadurch gekennzeichnet, dass** die quasi-bistabile Verankerung durch eine Polymerschicht mit Komponenten definiert wird, die nach zwei Belichtungen mit in senkrechten Richtungen polarisiertem Licht dichroitisch sind.

## Claims

1. Display device based on liquid crystals, comprising a nematic liquid-crystal material (10) with positive dielectric anisotropy sandwiched between two transparent confinement plates (20, 30) each provided with transparent electrodes (22, 32), at least one of the plates, (30), defining a quasi-bistable anchoring comprising a planar anchoring component and main electrical supply means (40) suitable for applying a temporary electric field to the liquid-crystal material (10) capable of breaking the anchoring on the aforementioned plate (30), **characterized in that** the quasi-planar anchoring and the electrical supply means are suitable for allowing, after the anchoring has been broken, due to the effect of hydrodynamic instabilities, fluid movements suitable for leading to the formation of a disordered texture according to different localized orientations of the liquid-crystal molecules (10) corresponding to the preferred orientations of the quasi-bistable anchoring resulting from a network of nematic surface defects.

2. Display device according to Claim 1, **characterized in that** it furthermore comprises secondary electrical supply means (40) capable of applying an erasing electric field to the liquid-crystal material (10) making it possible to reestablish an anchoring of uniform orientation on the plate (30) exhibiting a quasi-bistable anchoring.

3. Display device according to one of Claims 1 and 2, **characterized in that** the plate (30) defining a quasi-bistable anchoring defines a monostable surface ground state while at the same time allowing at least one higher-energy bistable anchoring.

4. Display device according to Claim 3, **characterized in that** the monostable surface ground state corresponds to a planar anchoring while the allowed bistable anchoring corresponds to two oblique orientations which are symmetrical with respect to the monostable surface ground state.

5. Display device according to one of Claims 3 and 4, **characterized in that** the bistable anchoring is defined by controlled oblique evaporation of SiO.

6. Display device according to one of Claims 3 and 4, **characterized in that** the bistable anchoring is defined by thin Langmuir-Blodgett films exhibiting an optical anisotropy after absorption of polarized light in two perpendicular directions.

7. Display device according to one of Claims 1 to 6, **characterized in that** the plates (20, 30) define, in the off state, a hybrid structure for the liquid-crystal molecules (10): planar on the quasi-bistable anchoring plate and homeotropic on the opposite plate (20).

8. Display device according to one of Claims 1 to 7, **characterized in that** each of the two plates (20, 30) defines a quasi-bistable anchoring.

9. Display device according to one of Claims 1 to 8, **characterized in that** the main electrical supply means (40) are designed to apply electric-field pulses of variable strength to the liquid-crystal material (10), making it possible to modulate the resulting optical contrast.

10. Display device according to one of Claims 1 to 9, **characterized in that** at least one of the plates, (20 or 30), is suitable for injecting charges of controlled polarity into the liquid-crystal material (10).

11. Display device according to Claim 10, **characterized in that** the plate (20) opposite that (30) defining the quasi-bistable anchoring is suitable for injecting charges of defined polarity into the liquid-crystal material (10).

12. Display device according to one of Claims 1 to 11, **characterized in that** the quasi-bistable plate (30) is suitable for injecting charges of defined polarity into the liquid-crystal material (10).

13. Display device according to one of Claims 1 to 12, **characterized in that** the main electrical supply means (40) are designed to reach the Felici threshold given by the equation $qEd^3/\eta D \simeq 1$, in which :

   q represents the average charge density per unit volume;
   E represents the electric field;
   d represents the thickness of the cell;
   $\eta$ represents the average nematic viscosity; and
   D represents the diffusion coefficient for ions.

14. Display device according to Claim 2, **characterized in that** the secondary electrical supply means (40) are suitable for generating electrical pulses of polarity opposite to that of the main electrical supply means.

15. Display device according to Claim 2, **characterized in that** the secondary electrical supply means (40) are designed to generate electrical pulses of the same polarity as the main electrical supply means, with a strength sufficient to break the anchoring but less than that required to obtain hydrodynamic instabilities, when their threshold is greater than that of the anchoring of the quasi-bistable plate.

16. Display device according to Claim 2, **characterized in that** the secondary electrical supply means (40) are designed to generate alternating electrical pulses with a strength comparable to that of the main means and with a frequency sufficiently high not to induce hydrodynamic instabilities.

17. Display device according to one of Claims 1 to 16, **characterized in that** the plate (20) opposite that (30) defining a quasi-bistable anchoring possesses a silane coating.

18. Display device according to one of Claims 1 to 17, **characterized in that** the plate (20) opposite that (30) defining a quasi-bistable anchoring possesses a DMOAP silane coating.

19. Display device according to one of Claims 1 to 18, **characterized in that** the plate (30) defining a quasi-bistable anchoring is coated with an ionic silane material allowing injection, compatible with the quasi-bistable anchoring.

20. Display device according to one of Claims 1 to 19, **characterized in that** it comprises a current-injection electrode (22) consisting of an alternation of electrically conductive and nonconductive bands.

21. Display device according to Claim 20, **characterized in that** the alternation of bands is produced by rubbing an electrode (22).

22. Display device according to one of Claims 1 to 21, **characterized in that** the hydrodynamic instabilities consist of the Felici instability.

23. Display device according to one of Claims 1 to 22, **characterized in that** the quasi-bistable anchoring is defined by a layer of polymer containing dichroic compounds, after two exposures to polarized light, in perpendicular directions.

FIGURE 1

FIGURE 2

FIGURE 3

EP 0 773 468 B1

FIGURE 4

## FIGURE 5

## FIGURE 6

## FIGURE 7

## FIGURE 8

FIGURE 9a

FIGURE 9b

5.00 V/div                    100 ms/div

FIGURE 10a

4.00 V/div                    100 ms/div

FIGURE 10b

10.0 V/div                    100 ms/div

FIGURE 10c

4.00 V/div 100 ms/div

FIGURE 11

FIGURE 13

V = 0 V = 0

I = 0 I = 0

FIGURE 12

EP 0 773 468 B1

## FIGURE 14a

40.0 V/div     200 µs/div

V = 0

↕ 40 Volts

I = 0

I = 0
0,5 Volts

## FIGURE 14b

40.0 V/div     200 µs/div

V = 0

↕ 40 Volts

I = 0

I = 0

↕ 1 Volt